Europäisches Patentamt

European Patent Office

Office européen des brevets

(11) Publication number: **0 062 171**
**B1**

(12) **EUROPEAN PATENT SPECIFICATION**

(45) Date of publication of patent specification: **30.10.85**

(21) Application number: **82101862.9**

(22) Date of filing: **09.03.82**

(51) Int. Cl.⁴: **G 11 B 23/04,** G 11 B 23/26, G 11 B 15/66

(54) **Single reel tape cartridge.**

(30) Priority: **30.03.81 US 249266**

(43) Date of publication of application:
**13.10.82 Bulletin 82/41**

(45) Publication of the grant of the patent:
**30.10.85 Bulletin 85/44**

(84) Designated Contracting States:
**DE FR GB IT**

(56) References cited:
**DE-C- 862 060
DE-U-1 899 166
GB-A-1 021 647
US-A-3 169 721**

(73) Proprietor: **International Business Machines
Corporation
Old Orchard Road
Armonk, N.Y. 10504 (US)**

(72) Inventor: **Richard, Maurice Edmund
4700 N. Snyder Circle
Tucson Arizona 85715 (US)**
Inventor: **Rinkleib, Helfried Otto
9846 E. Rosewood Street
Tucson Arizona 85710 (US)**

(74) Representative: **Lewis, Alan John
IBM United Kingdom Patent Operations Hursley
Park
Winchester, Hants, S021 2JN (GB)**

Courier Press, Leamington Spa, England.

## Description

The invention relates to single reel cartridges for magnetic tape and, in particular, to such cartridges in which a leader block is attached to the free end of the tape.

US—A—3,169,721 (F. Laa) relates to a casing for a single spool of tape having an opening in a side wall for the inlet and outlet of tape. Laa is particularly concerned with such casings in which the tape is provided with an extension. The extension is broader or thicker than the tape and the tape opening in the casing is dimensioned so that the extension cannot pass therethrough. Laa addresses the problem that, unless provision is made against it, there is a risk that the tape will emerge accidentally from the casing. Laa discloses positioning a retaining leaf spring in a channel leading tangentially into the casing. When the tape is fully wound on the reel the channel forms a sort of cache in which the extension is retained by the spring. To permit coupling of Laa's extension to a tape feed device, a wide slot is formed through the wall of the casing. To form the coupling a suitable coupling element is passed through the slot into the interior of the casing and engaged with the back of the extension.

The Laa slot has an area comparable with the area of this tape inlet/outlet opening and Laa does little therefore to prevent contamination from entering the casing. Further since the Laa channel is arranged tangentially to the periphery of the fully wound tape, as the tape is unwound it will rub against the entrance to the channel.

The Applicants have appreciated that it is desirable to prevent contamination from entering a magnetic tape cartridge since it would interfere with subsequent reading and writing of information on the magnetic tape. Contamination arises either from external sources or from internal sources, such as when the tape slides over a guiding surface. It will be recognized that the tape path from the reel to a guiding surface external of the cartridge will vary as a function of the amount of tape wound on the reel and the distance to the first guiding surface. Where the guiding surface is external to the cartridge, the height of the opening through which the tape passes in exiting the cartridge should be sufficient to prevent the tape from rubbing when the reel is either fully wound or fully unwound. The window size in the side of the cartridge to permit tape extraction is, therefore, generally determined by the width of the tape and the height necessary to prevent rubbing. It has been recognized that as the area of the window increases, the chance for external contamination entering the cartridge increases unless some type of sealing arrangement is provided. We have found that, where a leader block is attached to the free end of the tape for the purpose of threading the tape through the tape path, the leader block and cartridge can be constructed and arranged so that the leader block functions as a seal for the section of the cartridge from which the tape exits.

Accordingly the invention provides a magnetic tape cartridge in which a length of magnetic tape is wound on a single reel with the free end of the tape permanently connected to a generally rectangular shaped leader block, said cartridge completely surrounding said reel of magnetic tape except for an opening provided at one corner of said cartridge which permits tape wound on said reel to be unwound as said leader block is moved away from said cartridge, the corner of the cartridge through which the tape passes having a cache in which the leader block is retained when the tape is fully wound on said reel, said cartridge being characterised in that the cache is provided as a leader block receiving well including side walls which are cut-away to expose the leader block for lateral engagement by a coupling element, a bottom wall and opposed end walls attached to said bottom and side walls for engaging the leading and trailing surfaces of said leader block in a clamping relationship, said opening being provided through the bottom wall and one end wall and being effectively sealed when said leader block seats against said bottom wall and is clamped between said end walls.

A tape cartridge embodying the present invention will now be described by way of example with reference to the accompanying drawings, in which:

FIG. 1 is a plan view of a single reel magnetic tape cartridge embodying the present invention;

FIG. 2 is a perspective view of the tape cartridge shown in FIG. 1 with a portion of the cartridge broken away to show the window well and sills;

FIGS. 3a through 3c are schematic views illustrating the movement of the leader block between the home position and a position where tape is being extracted.

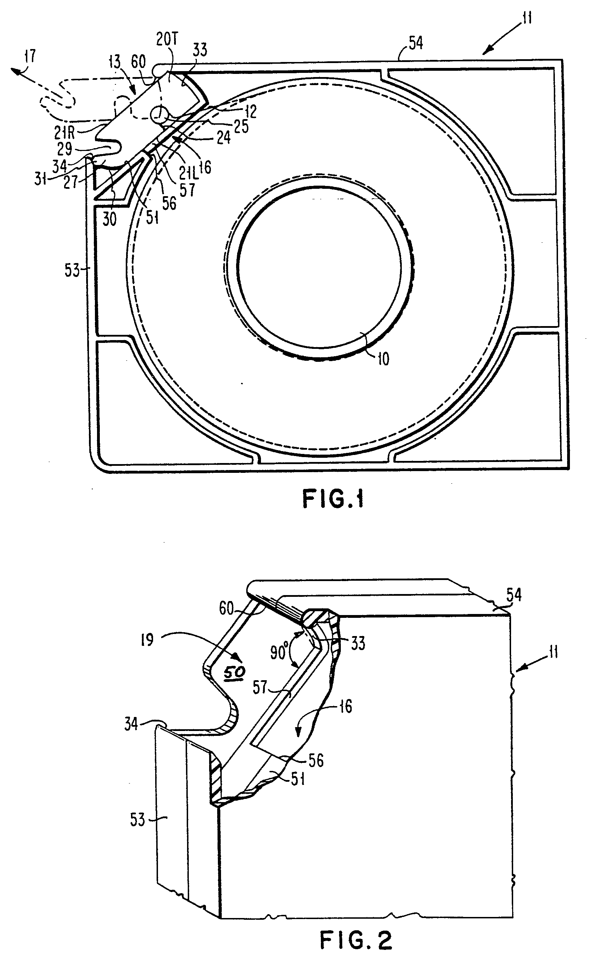

The cartridge shown in FIG. 1 is generally rectangular in shape except for one corner of the cartridge which is angled approximately 45° relative to the adjacent sides to provide a shorter fifth side in which a leader block window is constructed. As shown, the cartridge includes the reel hub 10, the casing 11, the tape 12, and the leader block 13. Tape exits from the cartridge 11 through window opening 16 when the leader block 13 is moved in the direction of arrow 17. Opening 16 is sealed off when the leader block is snapped into the leader block well 19.

The leader block 13 can be viewed generally as a rectangular block provided with two pairs of opposed surfaces. A slot 24 extends normal to surfaces 20T and 20B. A pin 24 is inserted into the slot which together functions to attach the tape 12 to the leader block 13. The surfaces 21L and 21R are generally parallel to the plane of the tape surface and the axis of the tape reel. One end 27 of block 13 is also provided with means for engaging an automatic threading apparatus which may be of the type shown in copending application No. 81104238.1, published under the number 42989. As shown therein, the leader block is provided with an opening into which a pin on the automatic threading device is positioned. Leader block 13, as shown, is provided with a slot 29 which corresponds generally to the pin receiving slot shown in the copending application. The surface 30, as shown, is slightly cylindrical and is provided with a rounded boss 31 which engages an inclined surface 34 of the leader block well 19 disposed in the cartridge. The opposite, or trailing, surface 32 of the block 13 may also be slightly cylindrical to mate with the surface 33 which is similarly shaped.

The surface which defines the sills for the window for permitting exiting of the tape from the cartridge can also be seen in FIG. 2 which illustrates in perspective one corner of the cartridge in which the leader block well is disposed. As shown in FIG. 2, the window 16 is disposed in surface 51 which extends at an angle of approximately 45° between side 53 and side 54 of the cartridge. The bottom of the window is defined by edge 56. As seen in FIG. 2, the left edge 57 of the window is also visible. The opposite edge is not shown. The top of the window is defined by the internal surface edge 55 since surface 33, which extends from the top surface 54 of the cartridge also at an angle of 45°, intersects surface 51. The surfaces 51 and 33, therefore, are disposed at an angle of approximately 90° relative to each other, as shown in FIG. 1. As previously mentioned, surface 33 is slightly rounded to cooperate with the end 32 of the leader block 13.

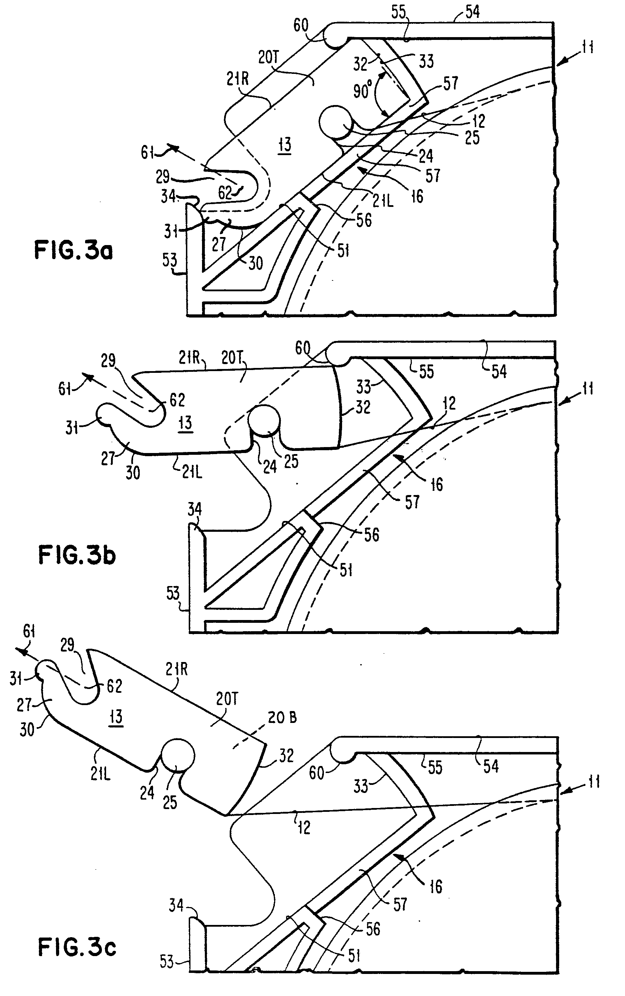

FIGS. 3a through 3c illustrate schematically the movement of the leader block 13 from a home position in well 19 of the cartridge to a position where the leader block is pulling tape through the opening 16.

FIG. 3a illustrates the leader block snugly positioned in well 16 with the rounded boss 31 engaging surface 34 of side 53 urging the leader block towards the surfaces 33 and 51. This is the home position of the leader block 13. In this home position the leader block 13 is within the cartridge and the risk of accidental damage to it is greatly reduced.

FIG. 3b illustrates the position of the leader block 13 in which the block has been pivoted about the rounded surface 60 of the cartridge as a result of a pulling force acting in the direction of arrow 61 through the imaginary axis 62 in the leader block slot 29. The force may originate as previously mentioned from an automatic threading apparatus of the type described in the copending application or some other suitable prior art means which forms no part of the present invention.

FIG. 3c illustrates the position of the leader block 13 out of the well 16 and moving in a direction which unwinds tape 12 from reel 10.

During rewinding, the leader block 13 follows the same path, but in the opposite direction, as the reel is rotated in a clockwise direction, as shown in FIG. 1.

While the invention has been particularly shown and described with reference to a preferred embodiment thereof, it will be understood by those skilled in the art that various other changes in the form and details may be made therein without departing from the scope of the invention.

Our co-pending European patent application No. 831000918.8 (Publication No. 86394) contains subject-matter in common with this application and claims a flat, generally rectangular tape cartridge containing a single reel of magnetic tape having the free end of the tape permanently anchored to a leader block accessible externally of the cartridge, said cartridge comprising a reel chamber bounded by two spaced generally rectangular side webs interconnected by a peripheral wall comprising four side walls of which two adjacent side walls do not extend to the intervening corner so as to leave an access gap in the periphery walls at that corner, said cartridge being characterised in that the adjacent ends of the two adjacent side walls are inter-connected by two partition walls having a tape exit opening therethrough, one partition wall extending inwardly of the cartridge in a plane tangential to the reel from one of the two adjacent side walls towards but not reaching to the other of the two adjacent walls and the second partition wall extending from the free end of the first partition wall to the other of the two adjacent side walls in a plane generally at right angles to that of the said one partition wall, in that the two adjacent side walls comprise end portions projecting towards the intervening corner beyond the respective connections with the partition walls, which end portions together with the side webs form a cavity housing the leader block in that the leader block seats closely against the two partition walls of the cavity to cover the exit opening and prevent the entry of contaminates into the cartridge and in that the leader block is a press or tight fit between the end portions so that it is resiliently retained therebetween.

## Claims

1. A magnetic tape cartridge in which a length of magnetic tape is wound on a single reel with the free end of the tape permanently connected to a generally rectangular shaped leader block, said cartridge completely surrounding said reel of magnetic tape except for an opening provided at one corner of said cartridge which permits tape wound on said reel to be unwound as said leader block is moved away from said cartridge, the corner of the cartridge through which the tape passes having a cache in which the leader block is retained when the tape is fully wound on said reel, said cartridge being characterised in that the cache is provided as a leader block receiving well (19) including side walls (50) which are cut-away to expose the leader block for lateral engagement by a coupling element, a bottom wall (51) and opposed end walls (33, 53) attached to said bottom and said walls (51, 50) for engaging the leading and trailing surfaces (31, 32) of said leader block (13) in a clamping relationship, said opening (16) being provided through the bottom wall (51) and one end wall (33) and being effectively sealed when said leader block (13) seats against said bottom wall (51) and is clamped between said end walls (33, 53).

2. A cartridge as claimed in claim 1, said cartridge being a generally rectangular, six-sided, box-like structure except for said one corner and being further characterised in that said bottom wall of said leader block receiving well is disposed at an angle of approximately 45° relative to the pair of peripheral sides joining at the corner.

## Revendications

1. Cassette de bande magnétique, dans laquelle une longueur de bande magnétique est enroulée sur une bobine unique, l'extrémité libre de la bande étant assemblée par une liaison permanente à un bloc amorce de forme générale rectangulaire, ladite cassette entourant entièrement ladite bobine de bande magnétique, à l'exception d'une ouverture prévue dans un angle de ladite cassette et qui permet à la bande enroulée sur ladite bobine de se dérouler lorsque ledit bloc amorce est éloigné de ladite cassette, l'angle de la cassette à travers lequel la bande passe présentant une niche dans laquelle le bloc amorce est retenu lorsque la bande est entièrement enroulée sur ladite bobine, ladite cassette étant caractérisée en ce que la niche est réalisée sous la forme d'un puits (19) pouvant recevoir le bloc amorce et qui comprend des parois latérales (50) qui sont échancrées de manière à dégager le bloc amorce pour qu'il soit attaqué latéralement par un élément d'accouplement, une paroi de fond (51) et des parois d'extrémités opposées (33, 53) fixées à ladite paroi de fond et auxdites parois latérales (51, 50) pour coopérer avec les surfaces avant et arrière (31, 32) dudit bloc amorce (13) en établissant une relation de serrage, ladite ouverture (16) étant formée travers la paroi de fond (51) et une paroi d'extrémité (33) et étant efficacement obturée lorsque ledit bloc amorce (13) est appliqué contre ladite paroi de fond (51) et est serré entre lesdites parois d'extrémités (33, 53).

2. Cassette selon la revendication 1, cette cassette étant une structure en forme de boîte, de forme générale rectangulaire, à six faces, à l'exception d'un angle, et étant caractérisée en outre en ce que ladite paroi de fond dudit puits de réception du bloc amorce est inclinée d'un angle d'environ 45° sur les deux côtés périphériques qui se rejoignent à cet angle.

## Patentansprüche

1. Magnetbandkassette, in welcher ein Abschnitt eines Magnetbandes auf eine einzige Spule mit mit einem im wesentlichen rechteckig geformten Führungsblock in dauernder Verbindung stehendem freiem Ende des Bandes gewickelt ist, wobei die Kassette die Magnetbandspule mit Ausnahme einer an einer Ecke der Kassette vorgesehenen Öffnung, welche ein Abwickeln des auf die Spule gewickelten Bandes bei Bewegung des Führungsblocks weg von der Kassette gestattet, vollständig umgibt, wobei die Ecke der Kassette, durch welche das Band läuft, einen Schlupfwinkel aufweist, in welchem der Führungsblock bei voll auf die Spule aufgewickeltem Band aufgenommen ist, dadurch gekennzeichnet, daß der Schlupfwinkel als eingelassene Aufnahme (19) für den Führungsblock vorgesehen ist, welche Seitenwände (50), welche zur Freilegung des Führungsblocks für ein seitliches Angreifen eines Kopplungselements abgeschnitten sind, eine Bodenwand (51) und an der Boden- und Seitenwand (51, 50) angefügte gegenüberliegende Endwände (33, 53) für ein Erfassen der Vorder- und der Hinterwand (31, 32) des Führungsblocks (13) in Klemmbeziehung aufweist, wobei die Öffnung (16) in der Bodenwand (51) und einer Endwand (33) vorgesehen und wirksam abgeschlossen ist, wenn der Führungsblock (13) gegen die Bodenwand (51) anliegt und zwischen den Endwänden (33, 53) geklemmt ist.

2. Kassette nach Anspruch 1, wobei die Kassette mit Ausnahme der einen Ecke ein im wesentlichen rechteckiger, sechsflächiger, kastenartiger Aufbau ist, ferner dadurch gekennzeichnet, daß die Bodenwand der Führungsblockaufnahme unter einem Winkel von ungefähr 45° in Bezug auf das Paar von an der Ecke zusammentreffenden Umfangsflächen angeordnet ist.

**FIG. 1**

**FIG. 2**

0 062 171

FIG.3a

FIG.3b

FIG.3c

2